# EUROPEAN PATENT SPECIFICATION

(11) **EP 1 288 687 B1**
(45) Date of publication and mention of the grant of the patent: **14.12.2005**
(21) Application number: 01307492.7
(22) Date of filing: 03.09.2001
(51) Int. Cl.: G02B 6/42

(54) **Method for aligning a passive optical element to an active optical device**
Methode zur Ausrichtung eines passiven optischen Elements auf ein aktives optischen Elements
Methode d'alignement d'un élément optique passif avec un élément optique actif

(43) Date of publication of application: 05.03.2003
(73) Proprietor: Agilent Technologies, Inc. (a Delaware corporation), Palo Alto, CA 94303 (US)
(72) Inventor: Mignosi, Christine, Ipswich, Suffolk IP5 3UA (GB); Kennedy, Ken, Ipswich, Suffolk IP3 0NE (GB); Lage, Herbert, Ipswich, Suffolk IP1 3JP (GB); Southgate, Seirian, Ipswich, Suffolk (GB); Leeks, Andrea, Ipswich, Suffolk IP1 6PN (GB)
(74) Representative: Coker, David Graeme

(56) References cited:
- EP-A- 0 541 820
- EP-A- 0 798 576
- EP-A- 0 887 674
- US-A- 4 994 143
- US-A- 5 644 668
- US-A- 5 906 753
- OKANO H ET AL: "PASSIVE ALIGNED HYBRID INTEGRATED WDM TRANSCEIVER MODULE USING PLANAR LIGHTWAVE CIRCUIT PLATFORM" IEICE TRANSACTIONS ON ELECTRONICS, INSTITUTE OF ELECTRONICS INFORMATION AND COMM. ENG. TOKYO, JP, vol. E80-C, no. 1, 1997, pages 112-116, XP000740612 ISSN: 0916-8524

## Description

### Field of the Invention

This invention relates, in general, to a method for aligning a passive optical element, such as an optical fibre or a passive optical waveguide to an active optical device, such as a semiconductor laser, and more particularly to such a method which provides improved alignment in three dimensions.

### Background of the Invention

By the term "passive optical element", it is intended to include optical fibres, passive optical waveguides, such as optical couplers, splitters, junctions, etc, that are fabricated on a substrate, or any other passive optical devices and by the term "active optical device", it is intended to include laser diodes, photo diodes, Electro-Absorption Modulators (EAM), or any other active optical devices that include an active semiconductor region or layer therein.

In order to efficiently couple a passive optical element to an active optical device, the passive optical element needs to be correctly aligned to the active region (the laser emitting or absorbing portion) of the semiconductor device. The semiconductor device is usually manufactured by a process of deposition of different conductive, semiconductive and insulating layers on a substrate and photolithography to produce a desired semiconductor structure of the device. The active region of the device is formed by one more layers of the device and is usually arranged to be generally midway up the front facet (face) of the device.

In order to accurately align, for example, an optical fibre with the active region, therefore, it is necessary to align the fibre, not just in the x and y directions (the horizontal plane) as disclosed in EP patent application No. 97400667.8 (publication number EP 0 798 576 A2), but also in the z direction (vertically).

One known way of carrying out this alignment is to provide fiducials in the semiconductor device, which serve as precise markers for the position of the light emitting or absorbing region. The fiducials are usually circular patterns that are etched into the same layer that forms the active region forming the laser.

Since, however, the fiducials are therefore within the body of the device, they are difficult to detect using imaging apparatus used for accurate x-y alignment. It is common, therefore, for layers (for example a P type layer) grown above the fiducials to be grown in a way that do not fully planarise the semiconductor surface. The growth conditions used to avoid planarisation (e.g. increased temperature) also appears to have other effects in the performance of the device, although these are not yet fully understood, such as increased dopant diffusion.

Although the higher temperature growth of the P-type layer enables better x-y alignment of the fibre to be achieved, the z-direction alignment problem remains. This has previously been solved by cleaving one row of laser dies on a finished wafer to measure the depth of the active region in those dies, as compared to the surface of the dies. An assumption is then made that the active region for the rest of the laser dies on the wafer will be the same as in the destroyed dies and the alignment of the fibre proceeds by detecting the surface of the specific die to which it is to be aligned and determining the depth where the active region should be from the surface. Although this technique works reasonably well, it requires the destruction of a row of dies on the wafer, is time consuming, and has the added uncertainty of measuring the depth below a nonplanar surface.

It is therefore an object of the present invention to provide a method for aligning an optical fibre to a semiconductor laser which overcomes, or at least reduces the disadvantages of the known method described above.

### Brief Summary of the Invention

Accordingly, the present invention provides a method for aligning a passive optical element with an active optical device comprising the steps as set forth in the claims that follow, such claims being an integral part of the present disclosure.

### Brief Description of the Drawings

One embodiment of the present invention will now be described, by way of example, with reference to the accompanying drawings, of which:
FIG. 1 is a schematic drawing of the structure of a semiconductor laser device according to a first embodiment of the invention; and
FIG. 2 is an schematic drawing of an optical module incorporating the semiconductor laser device of FIG. 1.

### Detailed Description of the Drawings

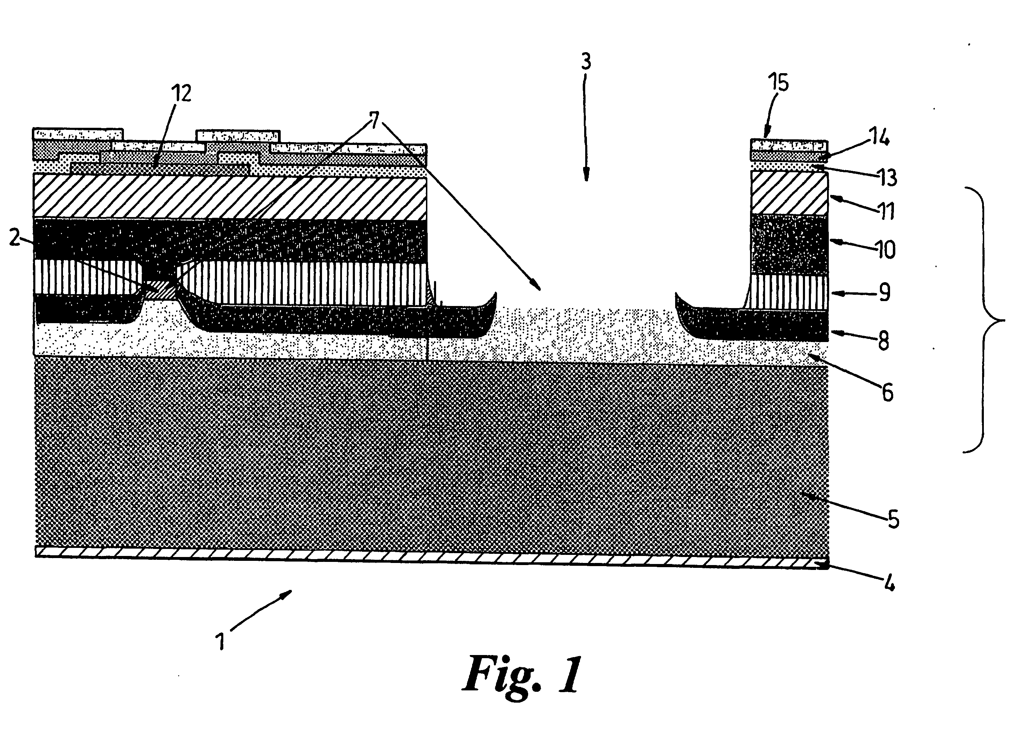

Thus, FIG. 1 shows a semiconductor laser device 1 having an active lasing region 2 and at least one fiducial 3. The device 1 is manufactured using standard epitaxial growth techniques, such as chemical vapour deposition, with, when necessary, photolithographic techniques for patterning the layers, for example using photoresist and etching steps.

The device 1 is formed of an N-type Indium Phosphide (InP) substrate layer 4 having a metal contact layer 5 disposed on its lower surface. The substrate layer 4 is manufactured by doping an InP crystal layer with Sulphur (S) ions. An N-type InP buffer layer 6 is then deposited on the substrate layer 4 by epitaxial growth techniques, as is well known. The buffer layer 6 is used to provide the N-side of an N-P junction in the device. The active lasing region 2 and the fiducial 3 are then formed by depositing an active layer 7 of InGaAsP on the buffer layer 6. The active layer 7 and part of the buffer layer 6 are then selectively etched off, by first applying a photoresist layer (not shown) onto the active layer 7 so as to mask the desired active lasing region 2 and the fiducial 3 and then applying an etchant to etch away the parts of the active layer 7 not masked by the photoresist and part of the thickness of the buffer layer 6. The etchant and the photoresist layer are then removed, and a P-type InP layer 8 is deposited over the remaining parts of the active layer 7 and the buffer layer 6. The P-type layer 8 is deposited on the substrate layer 4 by epitaxial growth techniques. The function of the P-type layer 8 is to provide the P-side of the N-P junction in the device.

An N-type InP blocking layer 9 is then deposited onto parts of the P-type InP layer 8. This is done by masking off at least the P-type InP layer 8 above the active lasing region 2, and then depositing the N-type InP blocking layer 9 by epitaxial growth techniques. The N-type InP blocking layer 9 is used to reduce leakage current through the device. After removing the mask, another P-type InP layer 10 is deposited over the N-type InP blocking layer 9 and the the P-type InP layer 8 above the active lasing region 2. The P-type InP layer 10 is deposited by epitaxial growth techniques. The P-type layer 10 is used as part of an NPNP junction as a thyristor to isolate the active region. A further P-type InP layer 11 is then deposited over the P-type InP layer 10 by epitaxial growth techniques as a further part of the thyristor.

A contact stripe 12 is then deposited on the P-type layer 11 over and overlapping the active lasing region 2. The contact stripe 12 is formed as a three component layer to improve conduction. A central portion of the contact stripe 12 overlapping the active lasing region 2 is then masked off and an oxide insulating layer 13 is deposited over the sides of the contact stripe 12 and the P-type layer 11. The oxide insulating layer 13 is deposited by plasma deposition. The function of the oxide insulating layer 13 is to insulate the metal from the semiconductor layers. A layer 14 of Platinum/Titanium alloy is then deposited over the oxide insulating layer 13 and the central portion of the contact stripe 12 (the mask having been first removed) by sputtering. The Titanium component is used to improve adhesion and the Platinum compinent is used to provide a barrier to Gold diffusion. Finally, a metal layer 15, such as Gold/Titanium alloy, is deposited on the layer 14 by sputtering, with the Gold providing efficient conduction and the Titanium improving adhesion.

It will be appreciated that, at this stage, the fiducial 3 is covered with a number of epitaxial layers. Therefore, those layers must now be removed to expose the fiducial down to the active layer 7. This is carried out by wet etching the device in the region of the fiducial, by masking off the other areas of the device and using an isotropic etchant that preferentially etches InP rather than InGaAsP. Such an etchant can be, for example, Hydrochloric acid (HCI) having a concentration of between 20% and 50%, and preferably about 36%, although it will be clear that other concentrations and etchants can be used according to the particular layers to be removed and the time taken for the etching step.

Once the fiducial 3 has been exposed, this provides a measurement point for measuring the precise depth at which the active lasing region 2 is in the device, as well as providing accurate X-Y positioning. Therefore, given that the thickness of the active lasing region 2 is known, as is its distance from the fiducial 3, an optical fibre can easily be aligned with the side face of the device 1 so as to be aligned with the active lasing region 2.

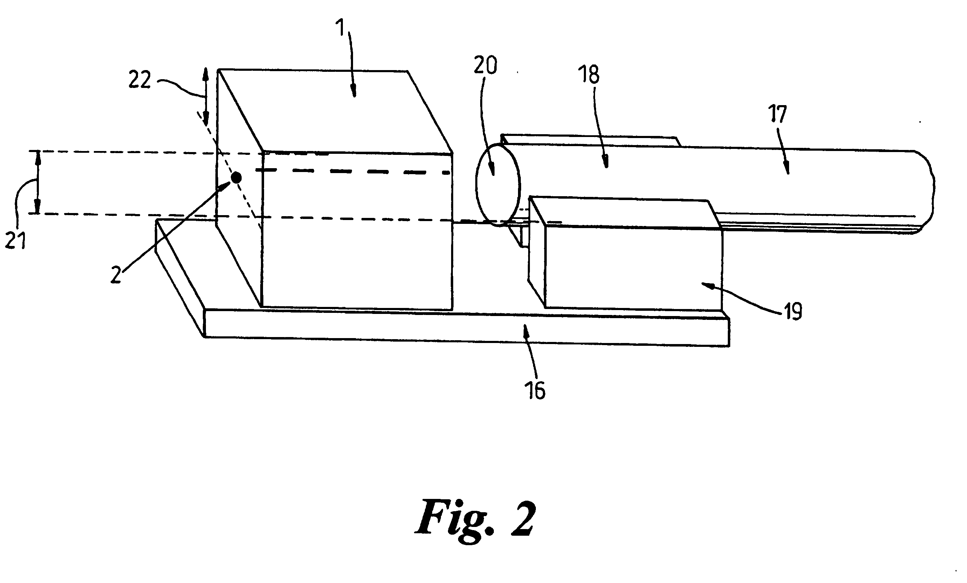

Turning thus to FIG. 2, there is shown part of a semiconductor laser device 1 mounted on a silicon bench 16. The device 1 has an active lasing region 2 to which an optical fibre 17 is to be aligned. The device 1 has one or more fiducials exposed from the top, but these are not shown in FIG. 2. An end 18 of the fibre 17 is mounted in a fibre groove element 19, which is adjustable in position in all three directions. An end facet 20 of the fibre 17 extends slightly from the groove element 19 so that it can be positioned as close as possible to the side if the device 1 aligned with the active lasing region 2.

In order to perform the alignment function, an imaging apparatus (not shown) determines the precise locations of one or more of the fiducials in the X and Y dimensions. A depth determining apparatus also determines the precise location of the fiducial in the Z dimension. Given that the exact position of the active lasing region 2 compared to the fiducials is known, it can be determined from the determined position of the fiducials, and the groove element is then moved so that the end facet 20 is brought into exact alignment with the active lasing region 2. Thus the depth of the active lasing region 2 to be aligned with the fibre, as shown by arrow 22, is accurately determined. The channel depth, shown by arrow 21, is the dimension on the device surrounding the active region 2 that is contacted by the facet 20 of the fibre.

Although in the above embodiment, the laser diode has been fixed and the optical fibre has been aligned to it, it will be appreciated that this alignment process can also be done the other way round (aligning the laser to a fixed waveguide or fibre). For example, it can be used to align a Silicon substrate with a V-groove for the fibre. The V-groove acts as a 'rail track' for the fibre, it fixes the position of the fibre in the y and z direction, but allows the fibre to be moved along the x direction to vary the distance from the fibre to the chip. This changes the amount of light that is collected by the fibre, but is not vital. Designs with 'stops' which fix the fibre's x position could also be used.

To protect the fibre from the high temperatures during the die soldering process, it can actually be 'glued' in place after the die has been soldered onto the substrate. However, the fibre position is fixed by the V-groove, the precise position of the V-groove (and therefore the fibre's position) being marked by fiducials.

The laser is soldered into place by a 'Precision Die Attach' (PDA) tool capable of holding the laser die with submicron accuracy during the solder process. The laser die is held by 'grippers' (like a very small pair of pliers) on its sides (and not with a vacuum pick up from the top that conventional tools use). The 'grippers' allow the top surface to be sees and with it the fiducials. The PDA tool measures the position of the fiducials on the Silicon substrate and on the laser die and positions the laser die accordingly. After the die solder process has been completed the fibre is 'glued' in place.

Typically a number of small fiducials are used for the horizontal (x and y) alignment to overcome the resolution limitations of optical microscopes and imaging CCD cameras. A number of small fiducials allows the software to correlate the measured position of individual fiducials (which will be resolution limited to roughly a few microns for an individual fiducial) and from this infer the absolute coordinates for the ensemble with much higher accuracy.

This limitation does not apply the determination of the depth (z) coordinate which is done interferometrically on a large fiducial (these large fiducials are sometimes called 'PDA keep out areas', because any debris has to be kept outside this region in order not to upset the interferometric measurement).

It will be appreciated that since the fiducials provide the exact vertical position of the active layer 7, each individual device can be accurately measured, without needing to cleave and destroy one whole row of devices on a wafer, nor make the assumption that the depth of the active layer in all devices on the wafer is the same as that in the destroyed row. Furthermore, by etching the fiducials, they are rendered much more visible, so that the imaging apparatus can more clearly locate them and determine their X-Y position than hitherto. Another advantage of the embodiment described above is that the laser diode does not need to be powered up (with the coupled light being measured at the other end of the optical fibre to achieve alignment. This is the conventional approach, e.g. the AFS does that for pump lasers). No electrical connections to the laser are needed, and it allows high temperature processing where the laser does not lase any more.

It is furthermore a very efficient way to precisely align a laser if the position of the fibre (or any other passive waveguide) is fixed and cannot be changed. It will also be appreciated that the above method can be used with optically active devices known as Electro-Absorption Modulators (EAMs), which do not emit light (on the contrary, they absorb it). The above method is a very efficient way of accurately aligning this type of device.

Whilst only one particular embodiment of the invention has been described above, it will be appreciated that a person skilled in the art can make modifications and improvements without departing from the scope of the present invention as defined by the claims.

## Claims

1. A method for aligning a passive optical element with an active optical device comprising the steps of manufacturing an active optical device (1) formed of a plurality of layers and having an active region (2) and at least one fiducial (3) made of the same layer (7) as the active region (2), and selectively etching the active optical device to expose a top surface of the fiducial, whilst masking the active optical device in the region of the active region,
said method comprising the steps of detecting the exposed surface of the fiducial (3) and determining therefrom an exact horizontal and vertical position of the active region (2), wherein the vertical position is determined by an interferometric depth determining apparatus, and aligning the passive optical element with the active region based on the exact horizontal and vertical position thereof.

2. A method for aligning a passive optical element with an active optical device according to claim 1, wherein the step of selectively etching the active optical device comprises masking the die surface with an appropriate masking layer so as to prevent at least the active region from being etched, and etching the active optical device using hydrochloric acid.

3. A method for aligning a passive optical element with an active optical device according to claim 2, wherein the hydrochloric acid has a concentration of between 20% and 50%.

4. A method for aligning a passive optical element with an active optical device according to claim 3, wherein the hydrochloric acid has a concentration of 36%,

5. A method for aligning a passive optical element with an active optical device according to any preceding claim, wherein the step of aligning the passive optical element with the active region based on the exact horizontal and vertical position thereof comprises moving the passive optical element until it is in alignment with the active region.

6. A method for aligning a passive optical element with an active optical device according to any preceding claim, wherein the step of aligning the passive optical element with the active region based on the exact horizontal and vertical position thereof comprises moving the active optical device until the active region is in alignment with the passive optical element.

7. A method for aligning a passive optical element with an active optical device according to any preceding claim, wherein the active optical device is a semiconductor laser diode.

8. A method for aligning a passive optical element with an active optical device according to any one of claims 1 to 6, wherein the active optical device is a photodiode.

9. A method for aligning a passive optical element with an active optical device according to any preceding claim, wherein the passive optical element is an optical fibre.

10. A method for aligning a passive optical element with an active optical device according to any one of claims 1 to 8, wherein the passive optical element is a passive optical waveguide.

11. A method for aligning a passive optical element with an active optical device according to any preceding claim, wherein the horizontal position is determined by imaging apparatus.

12. A method for aligning a passive optical element with an active optical device according to any one of claims 1 to 6, wherein the active optical device is an electro-absorption modulator.

## Patentansprüche

1. Ein Verfahren zum Ausrichten eines passiven optischen Elements mit einem aktiven optischen Bauelement, das die Schritte des Herstellens eines aktiven optischen Bauelements (1), das aus einer Mehrzahl von Schichten gebildet ist und eine aktive Region (2) und zumindest eine Justiermarke (3), die aus derselben Schicht (7) wie die aktive Region (2) hergestellt ist, aufweist, und des selektiven Ätzens des aktiven optischen Bauelements, um eine obere Oberfläche der Justiermarke freizulegen, während das aktive optische Bauelement in der Region der aktiven Region maskiert wird, umfasst,
wobei das Verfahren die Schritte des Erfassens der freiliegenden Oberfläche der Justiermarke (3) und des Bestimmens aus derselben einer exakten horizontalen und vertikalen Position der aktiven Region (2), wobei die vertikale Position durch eine die interferometrische Tiefe bestimmende Vorrichtung bestimmt wird, und des Ausrichtens des passiven optischen Elements mit der aktiven Region auf der Basis der exakten horizontalen und vertikalen Position derselben umfasst.

2. Ein Verfahren zum Ausrichten eines passiven optischen Elements mit einem aktiven optischen Bauelement gemäß Anspruch 1, bei dem der Schritt des selektiven Ätzens des aktiven optischen Bauelements ein Maskieren der Chipoberfläche mit einer entsprechenden Maskierungsschicht, um zu erreichen, dass zumindest die aktive Region nicht geätzt wird, und.ein Ätzen des aktiven optischen Bauelements unter Verwendung von Chlorwasserstoffsäure umfasst.

3. Ein Verfahren zum Ausrichten eines passiven optischen Elements mit einem aktiven optischen Bauelement gemäß Anspruch 2, bei dem die Chlorwasserstoffsäure eine Konzentration zwischen 20 und 50 % aufweist.

4. Ein Verfahren zum Ausrichten eines passiven optischen Elements mit einem aktiven optischen Bauelement gemäß Anspruch 3, bei dem die Chlorwasserstoffsäure eine Konzentration von 36 % aufweist.

5. Ein Verfahren zum Ausrichten eines passiven optischen Elements mit einem aktiven optischen Bauelement gemäß einem der vorhergehenden Ansprüche, bei dem der Schritt des Ausrichtens des passiven optischen Elements mit der aktiven Region auf der Basis der exakten horizontalen und vertikalen Position derselben ein Bewegen des passiven optischen Elements, bis es mit der aktiven Region ausgerichtet ist, umfasst.

6. Ein Verfahren zum Ausrichten eines passiven optischen Elements mit einem aktiven optischen Bauelement gemäß einem der vorhergehenden Ansprüche, bei dem der Schritt des Ausrichtens des passiven optischen Elements mit der aktiven Region auf der Basis der exakten horizontalen und vertikalen Position derselben ein Bewegen des aktiven optischen Bauelements, bis die aktive Region mit dem passiven optischen Element ausgerichtet ist, umfasst.

7. Ein Verfahren zum Ausrichten eines passiven optischen Elements mit einem aktiven optischen Bauelement gemäß einem der vorhergehenden Ansprüche, bei dem das aktive optische Bauelement eine Halbleiterlaserdiode ist.

8. Ein Verfahren zum Ausrichten eines passiven optischen Elements mit einem aktiven optischen Bauelement gemäß einem der Ansprüche 1 bis 6, bei dem das aktive optische Bauelement eine Photodiode ist.

9. Ein Verfahren zum Ausrichten eines passiven optischen Elements mit einem aktiven optischen Bauelement gemäß einem der vorhergehenden Ansprüche, bei dem das passive optische Element eine optische Faser ist.

10. Ein Verfahren zum Ausrichten eines passiven optischen Elements mit einem aktiven optischen Bauelement gemäß einem der Ansprüche 1 bis 8, bei dem das passive optische Element ein passiver optischer Wellenleiter ist.

11. Ein Verfahren zum Ausrichten eines passiven optischen Elements mit einem aktiven optischen Bauelement gemäß einem der vorhergehenden Ansprüche, bei dem die horizontale Position durch eine Bilderfassungsvorrichtung ermittelt wird.

12. Ein Verfahren zum Ausrichten eines passiven optischen Elements mit einem aktiven optischen Bauelement gemäß einem der Ansprüche 1 bis 6, bei dem das aktive optische Bauelement ein Elektroabsorptionsmodulator ist.

## Revendications

1. Procédé d'alignement d'un élément optique passif avec un dispositif optique actif comprenant les étapes consistant à fabriquer un dispositif optique actif (1) formé d'une pluralité de couches et ayant une région active (2) et au moins une région de référence (3) constituée de la même couche (7) que la région active (2) et à sélectivement graver le dispositif optique actif afin d'exposer une surface supérieure de la région de référence tandis qu'est masqué le dispositif optique actif dans la zone de la région active,
ledit procédé comprenant les étapes consistant à détecter la surface exposée de la région de référence (3) et déterminer à partir de celle-ci une position exacte horizontale et verticale de la région active (2), où la position verticale est déterminée par un appareil de détermination de profondeur par interférométrie, et à aligner l'élément optique passif avec la région active en se basant sur la position exacte horizontale et verticale de celle-ci.

2. Procédé d'alignement d'un élément optique passif avec un dispositif optique actif selon la revendication 1, dans lequel l'étape consistant à graver de manière sélective le dispositif optique actif comprend le fait de masquer la surface de la puce avec une couche de masquage appropriée de manière à empêcher qu'au moins la région active ne soit gravée, et de graver le dispositif optique actif à l'aide d'acide chlorhydrique.

3. Procédé d'alignement d'un élément optique passif avec un dispositif optique actif selon la revendication 2, dans lequel l'acide chlorhydrique a une concentration comprise entre 20 % et 50 %.

4. Procédé d'alignement d'un élément optique passif avec un dispositif optique actif selon la revendication 3, dans lequel l'acide chlorhydrique a une concentration de 36 %.

5. Procédé d'alignement d'un élément optique passif avec un dispositif optique actif selon l'une quelconque des revendications précédentes, dans lequel l'étape consistant à aligner l'élément optique passif avec la région active en se basant sur la position exacte horizontale et verticale de celle-ci comprend le fait de déplacer l'élément optique passif jusqu'à ce qu'il soit aligné avec la région active.

6. Procédé d'alignement d'un élément optique passif avec un dispositif optique actif selon l'une quelconque des revendications précédentes, dans lequel l'étape consistant à aligner l'élément optique passif avec la région active en se basant sur la position exacte horizontale et verticale de celle-ci comprend la fait de déplacer le dispositif optique actif jusqu'à ce que la région active soit alignée avec l'élément optique passif.

7. Procédé d'alignement d'un élément optique passif avec un dispositif optique actif selon l'une quelconque des revendications précédentes, dans lequel le dispositif optique actif est une diode laser à semiconducteur.

8. Procédé d'alignement d'un élément optique passif avec un dispositif optique actif selon l'une quelconque des revendications 1 à 6, dans lequel le dispositif optique actif est une photodiode.

9. Procédé d'alignement d'un élément optique passif avec un dispositif optique actif selon l'une quelconque des revendications précédentes, dans lequel l'élément optique passif est une fibre optique.

10. Procédé d'alignement d'un élément optique passif avec un dispositif optique actif selon l'une quelconque des revendications 1 à 8, dans lequel l'élément optique passif est un guide d'onde optique passif.

11. Procédé d'alignement d'un élément optique passif avec un dispositif optique actif selon l'une quelconque des revendications précédentes, dans lequel la position horizontale est déterminée par un appareil imageur.

12. Procédé d'alignement d'un élément optique passif avec un dispositif optique actif selon l'une quelconque des revendications 1 à 6, dans lequel le dispositif optique actif est un modulateur à électro-absorption.
